# EUROPEAN PATENT SPECIFICATION

(11) **EP 2 762 383 B1**
(45) Date of publication and mention of the grant of the patent: **05.10.2016**
(21) Application number: 12835686.2
(22) Date of filing: 29.06.2012
(51) Int. Cl.: B62B 7/06, B62B 7/08

(54) **PUSH CHAIR FOR CHILDREN**
KINDERWAGEN
POUSSETTE POUR ENFANTS

(30) Priority: 30.09.2011 CN 201110294056
(43) Date of publication of application: 06.08.2014
(73) Proprietor: Goodbaby Child Products Co., Ltd., Kunshan, Jiangsu 215331 (CN)
(72) Inventor: MA, Fusheng, Kunshan Jiangsu 215331 (CN)
(74) Representative: Jilderda, Anne Ayolt
(86) International application number: PCT/CN2012/077945
(87) International publication number: WO 2013/044662

(56) References cited:
- CN-A- 1 030 384
- CN-A- 1 883 992
- CN-A- 102 009 680
- CN-A- 102 390 424
- CN-U- 2 099 054
- CN-U- 202 272 034
- CN-Y- 2 391 785
- CN-Y- 2 414 964
- FR-A1- 2 837 160
- US-A- 2 573 106
- US-A- 4 256 325
- US-A- 4 386 790
- US-A1- 2008 217 966
- US-A1- 2009 008 907

## Description

The present invention relates to a baby carriage. Generally, a baby carriage in the prior art comprises a frame having an unfolded position and a folded position, a front wheel assembly and a rear wheel assembly which are disposed at the bottom of the frame, a supporting device disposed on the frame for supporting a baby, and a locking mechanism for locking the frame when it is unfolded. Currently, there exist a wide variety of frames in which the number of rods, the connection relations and connection locations between rods are different from each other, thus the principle and means of folding are different from each other. US 2,573,106 shows a baby carriage according to the preamble of claim 1.

The technical problem to be solved by the invention is to provide a baby carriage.

In order to overcome the above problem, the technical solution as defined in claim 1 is utilized in the invention.

A baby carriage comprises a frame having an unfolded position and a folded position, a front wheel assembly, a rear wheel assembly, a locking mechanism for locking the frame when it is unfolded, and a supporting device disposed on the frame for supporting a baby. The frame comprises a front bracket to which the front wheel assembly is mounted, a push rod, an upper connecting bracket disposed above the front bracket, a sliding part, which is rotatably connected with the front bracket and a rear bracket to which the rear wheel assembly is mounted. A lower portion of the push rod is rotatably connected with a rear portion of the front bracket, and the push rod can rotate relative to the front bracket around a first axis of rotation. A rear portion of the upper connecting bracket is rotatably connected with push rod, and the upper connecting bracket can rotate relative to the push rod around a second axis of rotation. The sliding part can rotate relative to the front bracket around a third axis of rotation. The rear bracket comprises a first rod and a second rod which are connected with each other and can rotate relative to each other around a fifth axis of rotation, the fifth axis of rotation is above the sliding part when the frame is unfolded. The first rod and the second rod respectively are slidably connected with two sides of the sliding part. A rotation joint is pivotally connected to the first rod or the second rod, the rotation joint is rotatably connected with the front portion of the upper connecting bracket such that the upper connecting bracket can rotate relative to the rotation joint around a fourth axis of rotation. Each of the first axis of rotation, the second axis of rotation, the third axis of rotation and the fourth axis of rotation extends transversely.

The expression "transversely" throughout the invention is defined in terms of the general habits of customers, that is to say, it means generally known transverse direction of a frame.

In some embodiments, the first axis of rotation, the second axis of rotation, the third axis of rotation and the fourth axis of rotation are parallel to each other.

In some another embodiments, the fifth axis of rotation is spatially vertical to the first axis of rotation.

In some further embodiments, the rotation joint, the first rod and the second rod are connected together through one shaft such that each of them is enabled to rotate relative to the other two around the fifth axis of rotation.

In some embodiments, the frame also comprises a connecting rod having an upper end being rotatably connected with the upper connecting bracket in such a way that the connecting rod can rotate relative to the upper connecting bracket around a sixth axis of rotation extending transversely, and a lower portion being rotatably connected with the front bracket.

In some another embodiments, the lower portion of the connecting rod is rotatably connected with the front bracket in such a way that the connecting rod can rotate relative to the front bracket around a seventh axis of rotation which extends transversely and locates between the third axis of rotation and the first axis of rotation.

In some still another embodiments, the front bracket is located below the fifth axis of rotation and extends through a space formed between the first rod and the second rod.

In some embodiments, a first through-hole and a second through-hole respectively are opened on the two sides of the sliding part, the first rod inserting into the first through-hole and the second rod inserting through the second through-hole.

In some further embodiments, the first through-hole is provided with a first limiting surface therein and the second through-hole is provided with a second limiting surface therein, when the frame is unfolded, the first rod contacts against the first limiting surface and the second rod contacts against the second limiting surface.

Herein, the expressions "upper", "lower", "front" and "rear" related to a direction are defined in the case of the frame being unfolded.

The scope of the invention as defined in the claims is not limited to the technical solutions particularly combined by the abovementioned technical features, other technical solutions discretionarily combined by the above-mentioned technical features or equivalent features should also be covered in the present invention, such as the technical solutions formed by exchanging the aforementioned features with the technical features having the similar functions.

Due to the application of the above technical solutions, as compared with the prior art, the invention has the following advantages:
When the push rod is rotated forwards, the upper connecting bracket will drive the rear bracket to rotate forwards around the third axis of rotation and slide forwards relative to the sliding part, and due to the limiting of the sliding part, the first rod and the second rod will transversely draw close to each other in the course of sliding forwards relative to the sliding part. Thus, the frame not only has simple configuration but also has smaller volume after folding.
   Fig.1 is a side view of the frame according to the invention, wherein the frame is in an unfolded position;
   Fig.2 is a side view of the frame of Fig.1 in a changed state, wherein the frame is in the course of converting between an unfolded position and a folded position;
   Fig.3 is a perspective view of the frame of Fig.1, wherein the frame is in the unfolded position;
   Fig.4 is a perspective view of the frame being in the state corresponding to the Fig.2, wherein the frame is in the course of converting between the unfolded position and the folded position;
   Fig.5 is a perspective view of the frame of Fig.1 in another changed state, wherein the frame is in the folded position;
   Fig.6 is a perspective view of the frame being in the state corresponding to the Fig.5, wherein the frame is in the folded position;
   Fig.7 is a top view of the frame of the Fig.1, wherein the frame is in the unfolded position;
   Fig.8 is a top view of the frame of Fig.5, wherein the frame is in the folded position.

The present invention will be described hereinafter with reference to the accompanying drawings. It is to be noted, however, that the drawings are given only for illustrative purpose and therefore not to be considered as limiting of its scope, for the invention may admit to other equally effective embodiments.

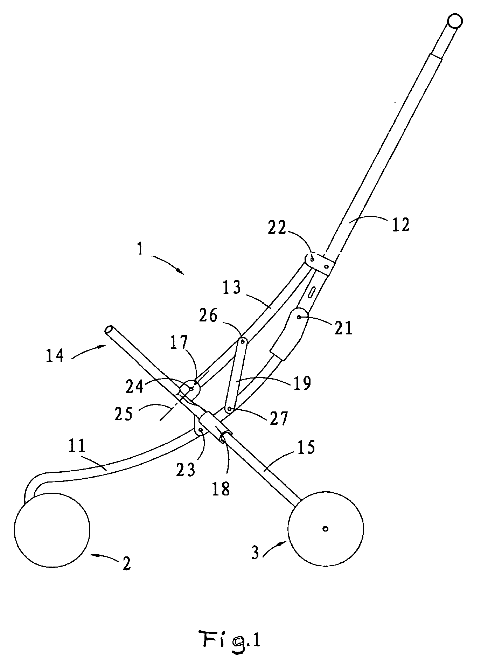

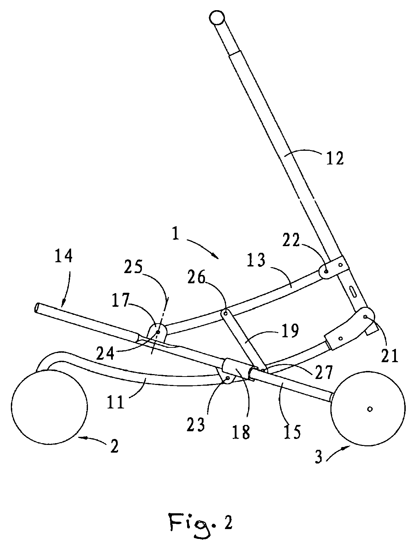

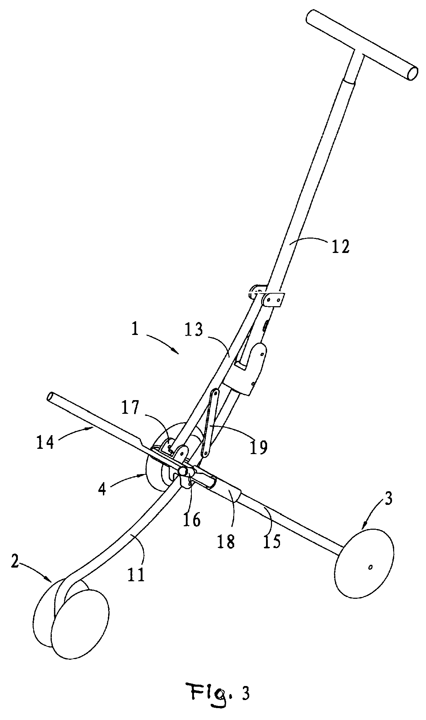

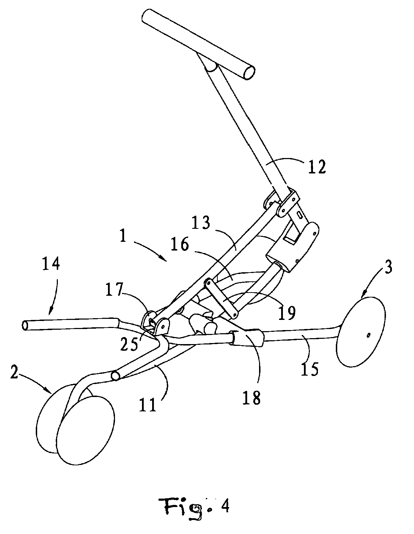

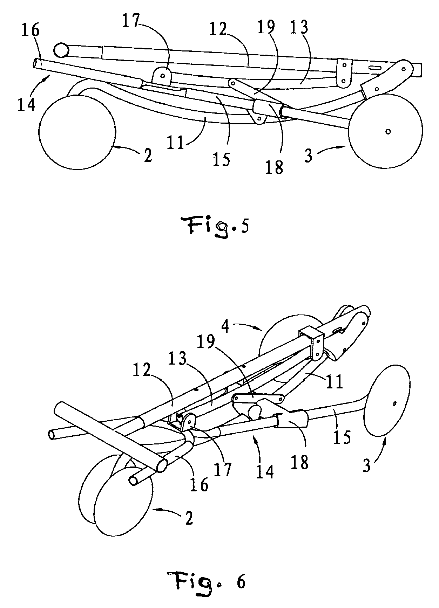

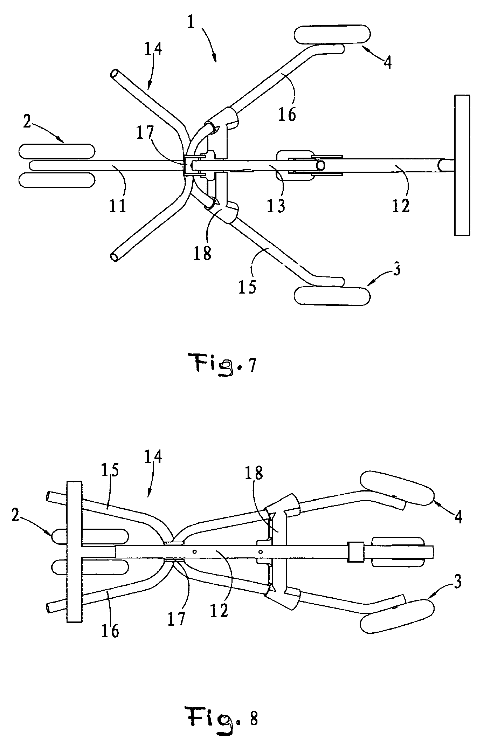

Fig.1 to Fig.8 show the structure and state change of the baby carriage according to one embodiment of the invention.

As shown in figures, the baby carriage comprises a frame 1 having an unfolded position and a folded position, a front wheel assembly 2, a rear wheel assembly, a locking mechanism for locking the frame 1 when it is unfolded, and a supporting device (not shown) disposed on the frame 1 for supporting a baby. The supporting device may be a baby seat pocket, a baby sleeping basket or the like.

As shown in figures, the frame 1 comprises a front bracket 11, a push rod 12 a lower portion of which is rotatably connected to a rear portion of the front bracket 11, an upper connecting bracket 13 disposed above the front bracket 11, a sliding part 18 rotatably connected to the front bracket 11, and a rear bracket 14 comprising a first rod 15 and a second rod 16 which intersect and rotatably connect with each other at the intersection joint.

The front wheel assembly 2 is mounted at the bottom of a front portion of the front bracket 11.

The push rod 12 can rotate relative to the front bracket 11 around the first axis of rotation 21. A rear portion of the upper connecting bracket 13 is rotatably connected with the push rod 12 and the upper connecting bracket 13 can rotate relative to the push rod 12 around the second axis of rotation 22. The second axis of rotation 22 is located above the first axis of rotation 21.

The sliding part 18 can rotate relative to the front bracket 11 around the third axis of rotation 23, and the third axis of rotation 23 is in front of the first axis of rotation 21.

The first rod 15 can rotate relative to the second rod 16 around the fifth axis of rotation 25. The first rod 15 and the second rod 16 respectively are slidably connected with the two sides of the sliding part 18. The sliding part 18 is located below the fifth axis of rotation 25.

A rotation joint 17 is pivotally connected to the first rod 15 or the second rod 16, and the rotation joint 17 is located above the sliding part 18. A front portion of the upper connecting bracket 13 is rotatably connected to the rotation joint 17 around the fourth axis of rotation 24.

The rear wheel assembly comprises a first rear wheel assembly 3 and a second rear wheel assembly 4. The first rear wheel assembly 3 is disposed at a lower portion of the first rod 15 and the second rear wheel assembly 4 is disposed at a lower portion of the second rod 16.

Each of the first axis of rotation 21, the second axis of rotation 22, the third axis of rotation 23 and the fourth axis of rotation 24 extends transversely.

The supporting device is not involved by the technical points of the invention, which is not shown in various figures because structure and installation means thereof are well known to a person skilled in the art. For example, the supporting device may be mounted on the upper connecting bracket or the rear bracket, and the supporting device may be fixedly or detachably mounted. For example, the supporting device may be a seat pocket disposed between the upper portion of the first rod 15 and the upper portion of the second rod 16 which are above the intersection joint of the first rod 15 and the second rod 16.

The first axis of rotation 21, the second axis of rotation 22, the third axis of rotation 23 and the fourth axis of rotation 24 are parallel to each other. The fifth axis of rotation 25 is spatially vertical to the first axis of rotation 21. In this embodiment, the rotation joint 17, the first rod 15 and the second rod 16 are connected together through one shaft.

The frame 1 also comprises a connecting rod 19, an upper end of which is rotatably connected to the upper connecting bracket 13. The connecting rod 19 can rotate relative to the upper connecting bracket 13 around a sixth axis of rotation 26 which extends transversely. The sixth axis of rotation is located between the second axis of rotation 22 and the fourth axis of rotation 24. A lower portion of the connecting rod 19 is rotatably connected to the front bracket 1, and the connecting rod 19 can rotate relative to the front bracket 11 around a seventh axis of rotation 27 which extends transversely. The seventh axis of rotation 27 is located between the third axis of rotation 23 and the first axis of rotation 21.

The lower portion of the connecting rod 19 may also be rotatably connected to the sliding part, and for a person skilled in the art, this can be achieved by means of displacement of the lower portion of the connecting rod 19 according to the configuration of the frame in fig.1. Thus, such connection means will not be shown detailedly in figures.

The connecting rod 19 also can rotate relative to the front bracket 11 around the third axis of rotation 23. The push rod 12, the upper connecting bracket 13, the connecting rod 19 and the front bracket 11 constitute a four-connecting-rod mechanism, such that the frame has stronger rigidity in the unfolded position. If the locking mechanism is disposed between the push rod 12 and the front bracket 11, when the frame 1 is locked in the unfolded position by the locking mechanism, the push rod 12, the upper connecting bracket 13, the connecting rod 19 and the front bracket 11 together constitute a stable triangular configuration. Furthermore, the locking mechanism also can be disposed between the push rod 12 and the upper connecting bracket 13. The specific structure of the locking mechanism is not involved by important technical points of the invention, thus, any locking parts which can lock two parts rotating relative to each other are applicable to the invention.

The front bracket 11 is located below the fifth axis of rotation 25, and between the first rod 15 and the second rod 16.

A first through-hole and a second through-hole respectively are opened on two sides of the sliding part 18. The first through-hole and a second through-hole respectively may be a bugle hole with a big aperture. The first rod 15 inserts into the first through-hole and the second rod 16 inserts into the second through-hole. The first through-hole is provided with a first limiting surface therein and the second through-hole is provided with a second limiting surface therein. When the frame 1 is unfolded, the first rod 15 contacts against the first limiting surface and the second rod 16 contacts against the second limiting surface, such that the frame is stable in the unfolded position.

As described above, the detailed description is illustrated according to the scope of the invention, but the invention is not limited to the aforementioned embodiments and implementing methods. Many variations and implements can be made within the scope of the invention by those skilled in the related art.

## Claims

1. A baby carriage, comprising a foldable frame (1), a front wheel assembly (2), a rear wheel assembly (3, 4), a locking mechanism for locking the frame (1) when it is unfolded, and a supporting device disposed on the frame (1) for supporting a baby, wherein the frame (1) comprises:
a front bracket (11), to which the front wheel assembly (2) is mounted, the front bracket (11) having a rear portion;
a push rod (12), which has a lower portion being rotatably connected with the rear portion of the front bracket (11) in such a way that the push rod can rotate relative to the front bracket around a first axis of rotation (21);
an upper connecting bracket (13) disposed above the front bracket (11), the upper connecting bracket (13) having a rear portion being rotatably connected with the push rod (12) in such a way that the upper connecting bracket can rotate relative to the push rod around a second axis of rotation (22), and a front portion;
a rear bracket (14), to which the rear wheel assembly (3, 4) is mounted, the rear bracket (14) comprising a first rod (15) and a second rod (16) which are connected with each other;
a rotation joint (17), which is pivotally connected to the first rod (15) or the second rod (16), the rotation joint (17) being rotatably connected with the front portion of the upper connecting bracket (13) such that the upper connecting bracket can rotate relative to the rotation joint around a fourth axis of rotation (24);
wherein each of the first axis of rotation (21), the second axis of rotation (22), the third axis of rotation (23) and the fourth axis of rotation (24) extends transversely; **characterised in** further comprising a sliding part (18), which is rotatably connected with the front bracket (11) in such a way that the sliding part can rotate relative to the front bracket around a third axis of rotation (23); wherein the first and second rods can rotate relative to each other around a fifth axis of rotation (25), the fifth axis of rotation (25) being above the sliding part (18) when the frame is unfolded, the first rod (15) and the second rod (16) respectively being slidably connected with two sides of the sliding part (18).

2. The baby carriage as claimed in claim 1, wherein the first axis of rotation (21), the second axis of rotation (22), the third axis of rotation (23) and the fourth axis of rotation (24) are parallel to each other.

3. The baby carriage as claimed in claim 1, wherein the fifth axis of rotation (25) is spatially vertical to the first axis of rotation (21).

4. The baby carriage as claimed in claim 1, wherein the rotation joint (17), the first rod (15) and the second rod (16) are connected together through one shaft such that each of them is enabled to rotate relative to the other two around the fifth axis of rotation (25).

5. The baby carriage as claimed in claim 1, wherein the frame (1) also comprises a connecting rod (19) having an upper end being rotatably connected with the upper connecting bracket (13) in such a way that the connecting rod can rotate relative to the upper connecting bracket around a sixth axis of rotation (26) extending transversely, and a lower portion being rotatably connected with the front bracket (11).

6. The baby carriage as claimed in claim 5, wherein the lower portion of the connecting rod (19) is rotatably connected with the front bracket (11) in such a way that the connecting rod can rotate relative to the front bracket around a seventh axis of rotation (27) which extends transversely and locates between the third axis of rotation (23) and the first axis of rotation (21).

7. The baby carriage as claimed in claim 1, wherein the front bracket (11) is located below the fifth axis of rotation (25) and extends through a space formed between the first rod (15) and the second rod (16).

8. The baby carriage as claimed in claim 1, wherein a first through-hole and a second through-hole respectively are opened on the two sides of the sliding part (18), the first rod (15) inserting into the first through-hole and the second rod (16) inserting through the second through-hole.

9. The baby carriage as claimed in claim 8, wherein the first through-hole is provided with a first limiting surface therein and the second through-hole is provided with a second limiting surface therein, when the frame (1) is unfolded, the first rod (15) contacts against the first limiting surface and the second rod (16) contacts against the second limiting surface.

## Patentansprüche

1. Kinderwagen, umfassend einen klappbaren Rahmen (1), eine Frontradeinheit (2), eine Hinterradeinheit (3, 4), ein Verriegelungsmechanismus zum Verriegeln des Rahmens (1) in aufgeklapptem Zustand, und eine Trageinrichtung am Rahmen (1) zum Tragen eines Babys, wobei der Rahmen (1) umfasst:
eine Frontkonsole (11), an welchem die Frontradeinheit (2) montiert ist, wobei die Frontkonsole (11) einen hinteren Teil aufweist;
eine Schubstange (12) mit einem unteren Teil, der drehbar an den hinteren Teil der Frontkonsole (11) derart angeschlossen ist, dass die Schubstange relativ zur Frontkonsole um eine erste Drehachse (21) verdrehbar ist;
eine obere Verbindungskonsole (13), angeordnet über der Frontkonsole (11), wobei die obere Verbindungskonsole (13) einen hinteren Teil aufweist, der an die Schubstange (12) drehbar derart angeschlossen ist, dass die obere Verbindungskonsole relativ zur Schubstange um eine zweite Drehachse (22) verdrehbar ist, und ein Frontteil;
eine hintere Konsole (14), an welcher die hintere Radeinheit (3, 4) angeschlossen ist, wobei die hintere Konsole (14) einen ersten Stab (15) und einen zweiten Stab (16) umfasst, die miteinander verbunden sind;
ein Drehgelenk (17), das an die erste Stange (15) oder an die zweite Stange (16) schwenkbar angeschlossen und mit dem Frontteil der oberen Verbindungskonsole (13) derart drehbar verbunden ist, dass die obere Verbindungskonsole relativ zum Drehgelenk um eine vierte Drehachse (24) verdrehbar ist;
wobei die erste Drehachse (21), die zweite Drehachse (22), die dritte Drehachse (23) und die vierte Drehachse (24) sich quer erstrecken, **gekennzeichnet durch** ein Gleitstück (18), das drehbar an die Frontkonsole (11) derart angeschlossen ist, dass das Gleitstück relativ zur Frontkonsole um eine dritte Drehachse (23) verdrehbar ist;
wobei der erste und der zweite Stab (15, 16) relativ zueinander um eine fünfte Drehachse (25) verdrehbar sind, und die fünfte Drehachse oberhalb des Gleitstückes (18) liegt, wenn der Rahmen aufgeklappt ist, und der erste Stab (15) und der zweite Stab (16) jeweils gleitend an zwei Seiten des Gleitstückes (18) angreifen.

2. Kinderwagen nach Anspruch 1, wobei die erste Drehachse (21), die zweite Drehachse (22), die dritte Drehachse (23) und die vierte Drehachse (24) parallel zueinander verlaufen.

3. Kinderwagen nach Anspruch 1, wobei die fünfte Drehachse (25) einen vertikalen Abstand zur ersten Drehachse (21) aufweist.

4. Kinderwagen nach Anspruch 1, wobei die Drehverbindung (17), der erste Stab (15) und der zweite Stab (16) mittels eines Schaftes derart miteinander verbunden sind, dass jedes Teil relativ zu den beiden anderen um die fünfte Drehachse (25) verdrehbar ist.

5. Kinderwagen nach Anspruch 1, wobei der Rahmen weiterhin einen Verbindungsstab (19) aufweist, mit einem oberen Ende, das drehbar an die obere Verbindungskonsole (13) derart angeschlossen ist, dass der Verbindungsstab relativ zur oberen Verbindungskonsole um eine sechste Drehachse (26) verdrehbar ist, die sich quer erstreckt, und einen unteren Teil, der drehbar an die Frontkonsole (11) angeschlossen ist.

6. Kinderwagen nach Anspruch 5, wobei der untere Teil des Verbindungsstabs (19) drehbar angeschlossen ist an die Frontkonsole (11) in einer solchen Weise, dass der Verbindungsstab relativ zur Frontkonsole um eine siebte Drehachse (27) verdrehbar ist, die sich quer erstreckt und zwischen der dritten Drehachse (23) und der ersten Drehachse (21) angeordnet ist.

7. Kinderwagen nach Anspruch 1, wobei die Frontkonsole (11) unterhalb der fünften Drehachse (25) angeordnet ist und sich durch einen Raum hindurch erstreckt, der zwischen dem ersten Stab (15) und dem zweiten Stab (16) gebildet ist.

8. Kinderwagen nach Anspruch 1, wobei eine erste Durchgangsbohrung und eine zweite Durchgangsbohrung an beiden Seiten des Gleitstückes (18) offen sind und der erste Stab (15) in die erste Durchgangsbohrung und der zweite Stab (16) durch die zweite Durchgangsbohrung hindurchgeführt sind.

9. Kinderwagen nach Anspruch 8, wobei die erste Durchgangsbohrung mit einer ersten Grenzfläche hierin und die zweite Durchgangsbohrung mit einer zweiten Grenzfläche hierin versehen sind, wenn der Rahmen (1) aufgeklappt ist, wobei der erste Stab (15) an der ersten Grenzfläche, und der zweite Stab (16) an der zweiten Grenzfläche anliegen.

## Revendications

1. Une poussette, comprenant un châssis pliable (1), un cadre pour la roue avant (2), un cadre pour chaque roue arrière (3, 4), un mécanisme de verrouillage pour verrouiller le châssis (1) lorsqu'il est déplié, et un dispositif de soutien disposé sur le châssis (1) pour soutenir un bébé, dans laquelle le châssis (1) comprend :
un support avant (11), sur lequel le cadre de la roue avant (2) est monté, le support avant (11) possédant une partie arrière ;
une tige de poussée (12), dont une partie inférieure est reliée de manière pivotante à la partie arrière du support avant (11) de telle manière que la tige de poussée peut tourner par rapport au support avant autour d'un premier axe de rotation (21) ;
un support de raccordement supérieur (13) placé au-dessus du support avant (11), le support de raccordement supérieur (13) possédant une partie arrière reliée de manière pivotante à la tige de poussée (12) de telle manière que le support de raccordement supérieur peut tourner par rapport à la tige de poussée autour d'un deuxième axe de rotation (22), et une partie avant ;
un support arrière (14), sur lequel le cadre des roues arrière (3, 4) est monté, le support arrière (14) comprenant une première tige (15) et une deuxième tige (16) qui sont reliées entre elles ;
une articulation de rotation (17), qui est reliée de manière pivotante à la première tige (15) ou à la deuxième tige (16), l'articulation de rotation (17) étant reliée de manière pivotante à la partie avant du support de raccordement supérieur (13) de telle manière que le support de raccordement supérieur peut tourner par rapport à l'articulation de rotation autour d'un quatrième axe de rotation (24) ;
dans lequel le premier axe de rotation (21), le deuxième axe de rotation (22), le troisième axe de rotation (23) et le quatrième axe de rotation (24) s'étendent transversalement ;
**caractérisé en ce qu'**il comprend également une partie coulissante (18) qui est reliée de manière pivotante au support avant (11) de telle manière que la partie coulissante peut tourner par rapport au support avant autour d'un troisième axe de rotation (23), les première et deuxième tiges pouvant tourner l'une par rapport à l'autre autour d'un cinquième axe de rotation (25), le cinquième axe de rotation (25) se situant au-dessus de la partie coulissante (18) lorsque le cadre est déplié, la première tige (15) et la deuxième tige (16) étant respectivement reliées de manière coulissante à deux côtés de la partie coulissante (18) ;

2. La poussette selon la revendication 1, dans laquelle le premier axe de rotation (21), le deuxième axe de rotation (22), le troisième axe de rotation (23) et le quatrième axe de rotation (24) sont parallèles.

3. La poussette selon la revendication 1, dans laquelle le premier axe de rotation (25) est vertical dans l'espace par rapport au premier axe de rotation (21).

4. La poussette selon la revendication 1, dans laquelle l'articulation de rotation (17), la première tige (15) et la deuxième tige (16) sont reliées l'une à l'autre par le biais d'un arbre de telle manière que chacune d'entre elles peut tourner par rapport aux deux autres autour du cinquième axe de rotation (25).

5. La poussette selon la revendication 1, dans laquelle le châssis (1) comprend également une tige de raccordement (19) dont l'extrémité supérieure est raccordée de manière pivotante au support de raccordement supérieur (13) de telle manière que la tige de raccordement peut tourner par rapport au support de raccordement supérieur autour d'un sixième axe de rotation (26) qui s'étend transversalement, et une partie inférieure étant raccordée de manière pivotante au support avant (11).

6. La poussette selon la revendication 5, dans laquelle la partie inférieure de la tige de raccordement (19) est raccordée de manière pivotante au support avant (11) de telle manière que la tige de raccordement peut tourner par rapport au support avant autour d'un septième axe de rotation (27) qui s'étend transversalement et se situe entre le troisième axe de rotation (23) et le premier axe de rotation (21).

7. La poussette selon la revendication 1, dans laquelle le support avant (11) est situé en-dessous du cinquième axe de rotation (25) et s'étend sur un espace formé entre la première tige (15) et la deuxième tige (16).

8. La poussette selon la revendication 1, dans laquelle un premier orifice et un second orifice s'ouvrent respectivement sur les deux côtés de la partie coulissante (18), la première tige (15) s'insérant dans le premier orifice et la deuxième tige (16) s'insérant dans le second orifice.

9. La poussette selon la revendication 8, dans laquelle le premier orifice est doté d'une première surface d'arrêt et le second orifice est doté d'une seconde surface d'arrêt, de sorte que lorsque le châssis (1) est déplié, la première tige entre en contact avec la seconde surface d'arrêt.
